# EUROPÄISCHE PATENTSCHRIFT

(11) **EP 0 584 474 B1**
(45) Veröffentlichungstag und Bekanntmachung des Hinweises auf die Patenterteilung: **12.02.1997**
(21) Anmeldenummer: 93109494.0
(22) Anmeldetag: 15.06.1993
(51) Int. Cl.: B21F 35/00, F16F 1/06

(54) **Verfahren und Vorrichtung zum Herstellen von gekrümmten Schraubenfedern**
Process and apparatus for manufacturing curved helical springs
Procédé et dispositif de fabrication de ressorts hélicoidaux courbés

(30) Priorität: 29.07.1992 DE 4224951
(43) Veröffentlichungstag der Anmeldung: 02.03.1994
(73) Patentinhaber: Fried. Krupp AG Hoesch-Krupp, 44145 Dortmund (DE)
(72) Erfinder: Vondracek, Hans, Ing., D-5805 Breckerfeld (DE); Kröber, Heinz, D-5800 Hagen 1 (DE)

(56) Entgegenhaltungen:
- WO-A-91/06785
- SOVIET INVENTIONS ILLUSTRATED Week 9051, 13 February 1991 Derwent Publications Ltd., London GB & SU-A-1542678

## Beschreibung

Die Erfindung betrifft ein Verfahren gemäß dem Oberbegriff des Anspruches 1 sowie eine Vorrichtung zur Durchführung des Verfahrens gemäß dem Oberbegriff des Anspruchs 4 (DE-A-4 124 326).

Im unbelasteten Zustand gekrümmte Schraubenfedern sind z. B. aus der DE-PS 1 505 616 und der DE-PS 3 743 450 bekannt. Schraubenfedern dieser Art werden vorteilhaft in Federbeinen von Fahrzeugachsen eingesetzt, da durch die gezielte Ausrichtung der Krümmung im Federbein unerwünschte Reibkräfte und Biegemomente an der Kolbenstange des Dämpfers weitgehend kompensiert werden können.

Die Fertigung gekrümmter Schraubenfedern erfolgt bisher ausschließlich auf Kaltwindeautomaten ohne Wickeldorn, wie sie z. B. aus dem "Handbuch Federn" von Dr. sc. techn. Manfred Meissner und Dipl.-Ing. Klaus Wanke, VEB Verlag Technik Berlin, 1988, Seiten 60 bis 62, bekannt sind, da bei diesem Formgebungsverfahren die gewünschten Krümmungen ohne Mehraufwand durch alternierende Änderung der Windungssteigungen realisiert werden können.

Im Gegensatz zu dornlosen Windeverfahren erfolgt insbesondere die Warmfertigung von Schraubenfedern auf sog. Wickelbänken, bei denen die Formgebung entweder durch zwei parallele, zylindrische Walzen, als Wickeldorn und Leitrolle bezeichnet, erfolgt oder die Funktion der Leitrollen durch eine CNC-gesteuerte Draht- bzw. Stabführung übernommen wird, wie die Veröffentlichungen der Hoesch Hohenlimburg AG "Warmgeformte Federn", Seiten 185 und 186, die anläßlich der 52. IAA in Frankfurt/Main 1987 sowie der Stahlwerke Brüninghaus GmbH "Technische Daten Fahrzeugfedern", Seiten 106 und 107, die anläßlich der 45. IAA in Frankfurt/Main 1973 überreicht wurden, zeigen.

Um mit vorhandenen Warmwickelstraßen gekrümmte Schraubenfedern herstellen zu können, wird in der DE 4 124 326 C1 ein Verfahren beschrieben, bei dem gekrümmte Schraubenfedern durch partielle Kühlung oder Erwärmung von Windungsteilen vor bzw. während des Setzens hergestellt werden sollen.

Die reproduzierbare Serienfertigung von gekrümmten Schraubenfedern nach diesem bekannten Verfahren ist stark abhängig von den lokalen Fließgrenzen, welche direkt durch die Vergütefestigkeit der Feder und die lokalen Federtemperaturen bestimmt werden.

Zur Erzielung der gewünschten Krümmung muß neben der lokal beeinflußten Fließgrenze eine für den jeweiligen Querschnitt oder Windungsabschnitt genau abgestimmte Beanspruchung während des Setzvorgangs aufgebracht werden, was bei den heute üblichen Toleranzforderungen einen wirtschaftlich nicht vertretbaren Aufwand bedeutet.

Von daher ist es Aufgabe der Erfindung, ein Verfahren der eingangs benannten Art sowie eine Vorrichtung zur Durchführung des Verfahrens zu entwickeln, mit dem bzw. der die gewünschte Biegung bzw. Krümmung des Federkörpers unter Einbeziehung einer vorhandenen Warmwickelstraße wirtschaftlich und sicher erzielt werden kann.

Nach der Erfindung wird die Aufgabe in Verbindung mit den Oberbegriffsmerkmalen durch die in den kennzeichnenden Teilen der Ansprüche 1 bzw. 4 angegebenen Merkmale gelöst.

Vorteilhafte und zweckmäßige weiterbildende Verfahrensschritte bzw. Ausführungsformen der erfindungsgemäßen Vorrichtung sind in den Ansprüchen 2 und 3 bzw. 5 bis 11 angegeben.

Die Vorteile des erfindungsgemäßen Verfahrens bzw. der Vorrichtung liegen insbesondere darin, daß gekrümmte Schraubenfedern weitgehend mit vorhandenen Fertigungseinrichtungen und guter Reproduzierbarkeit unter Berücksichtigung der Toleranzforderungen ohne großen Mehraufwand hergestellt werden können.

Nachfolgend wird die Erfindung anhand von in der Zeichnung schematisch dargestellten Ausführungsbeispielen näher erläutert.

Es zeigt
- Fig. 1: den Lageplan einer Warmwickelstraße,
- Fig. 2: ein Biegewerkzeug in geöffnetem Zustand in Vorderansicht,
- Fig. 3: ein anderes Biegewerkzeug in perspektivischer Ansicht,
- Fig. 4: einen Teil eines Biegewerkzeuges nach Fig. 3 in Seitenansicht in vergrößertem Maßstab,
- Fig. 5: das Biegewerkzeug nach Fig. 2 in geschlossenem Zustand,
- Fig. 6: das Biegewerkzeug nach Fig. 5 in abgesenktem Zustand,
- Fig. 7: einen Teil des Biegewerkzeuges nach den Fig. 2, 5 und 6 in Seitenansicht,
- Fig. 8: ein anderes Biegewerkzeug in Vorderansicht.

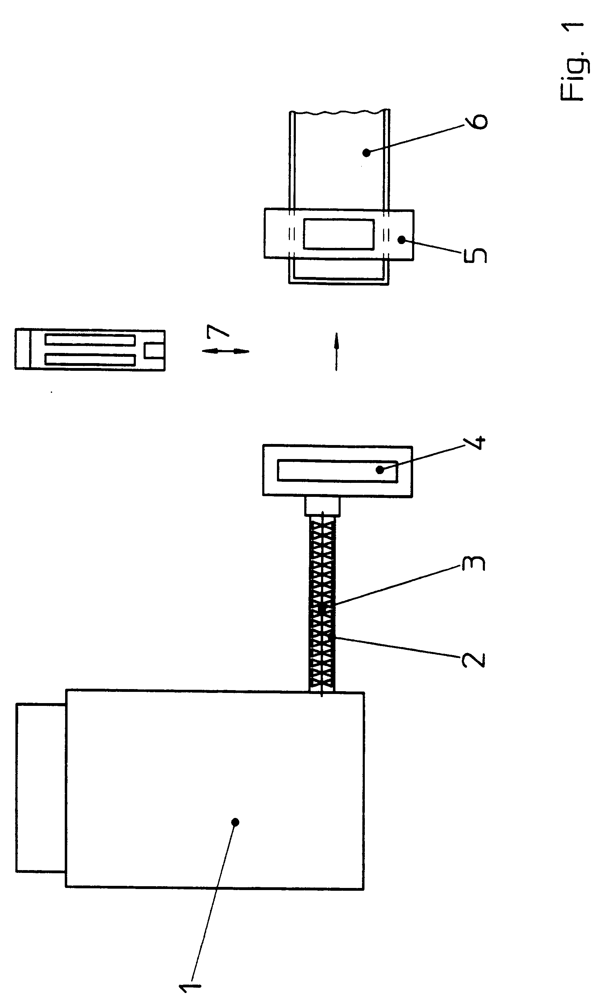

Gemäß Fig. 1 wird ein in einem Wärmeofen 1 erwärmter Stab 3 über einen Rollgang 2 einer Wickelbank 4 zugeführt.

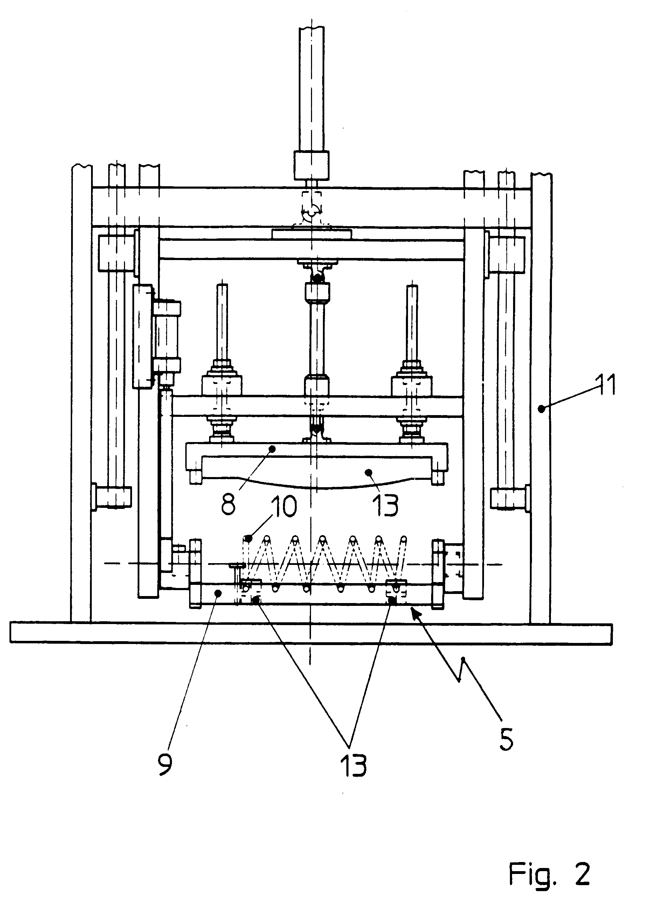

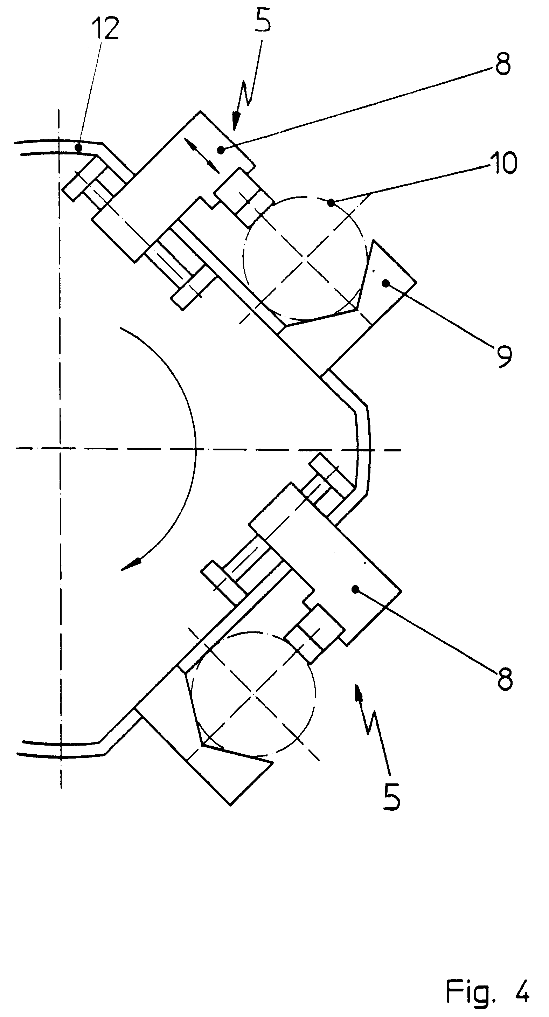

Nach Herstellen einer geraden Schraubenfeder 10 (Fig. 2 und 4) auf der Wickelbank 4 wird diese gegebenenfalls einer Einrichtung 7 zugeführt, in der zunächst die Endwindungen der Schraubenfeder 10 eingeformt werden.

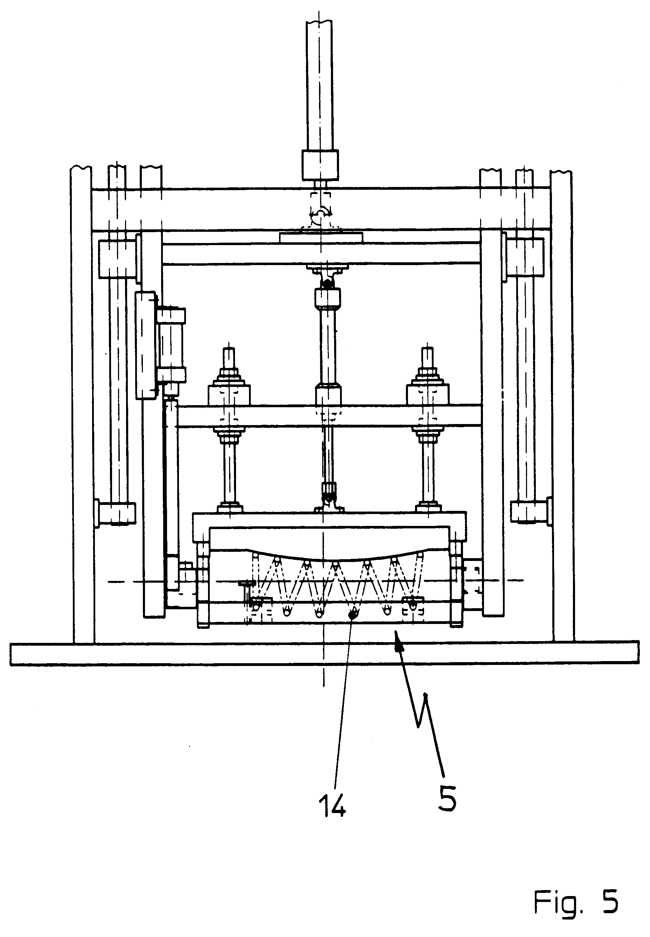

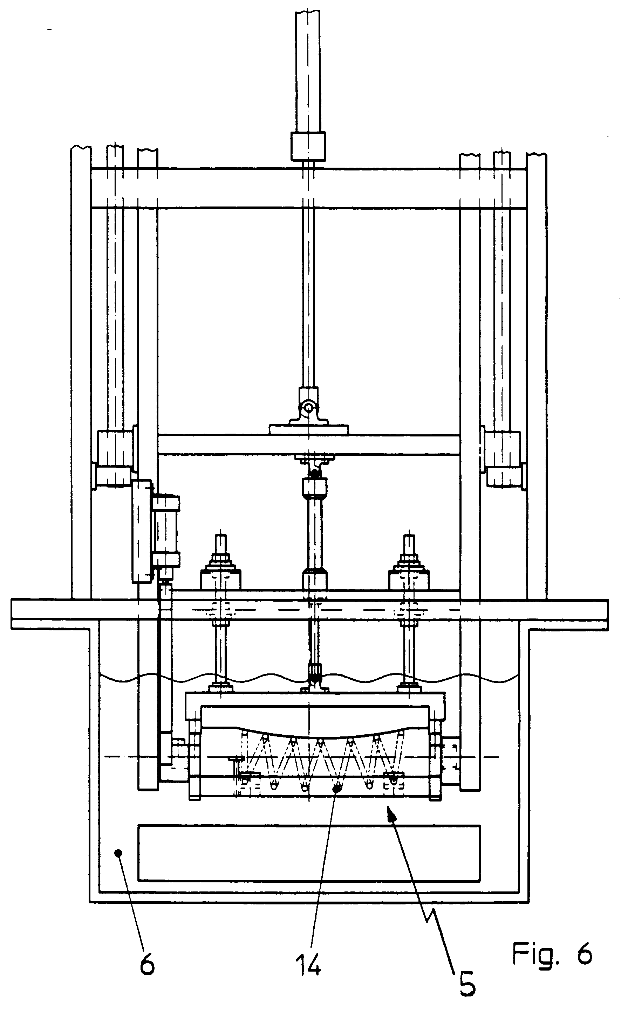

Diese so vorgeformte Schraubenfeder 10 wird danach einem Zangenähnlich ausgebildeten Biegewerkzeug 5 (Fig. 2 bis 8) zugeführt, das über einem Härtebecken 6 angeordnet ist. Nach den Fig. 2 und 5 bis 8 ist das Biegewerkzeug in einem Portalrahmen 11 über dem Härtebereich 6 angeordnet und mittels geeigneter, nicht näher erläuterter Absenkvorrichtungen in das Härtebecken 6 abtauchbar.

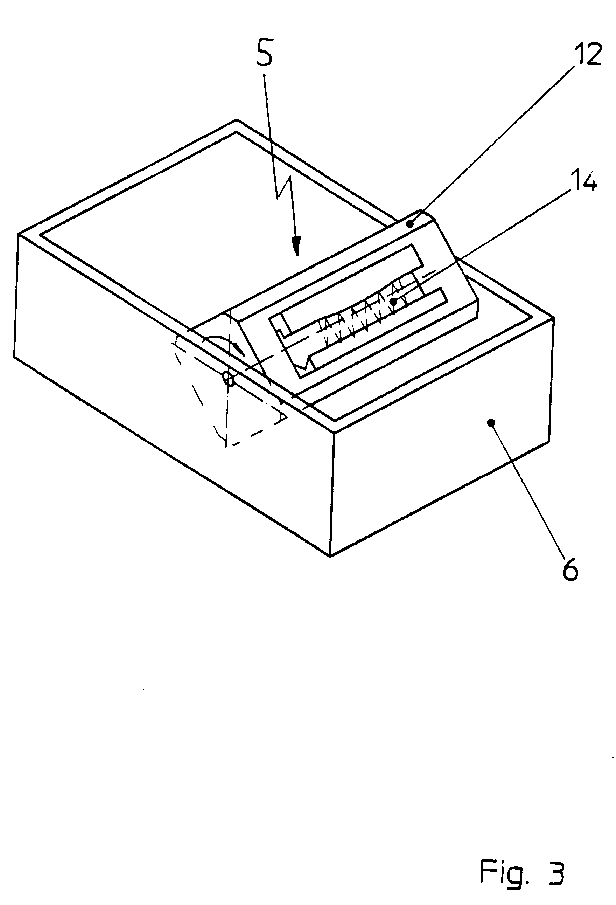

Die gerade Schraubenfeder 10 ist in das aus Ober- 8 und Unterteil 9 bestehende geöffnete Biegewerkzeug 5 (Fig. 2 und 4) eingelegt, wobei nach den Fig. 3 und 4 mehrere Biegewerkzeuge 5 auf dem Umfang einer zwischen den Seitenwänden des Härtebeckens 6 waagerecht angeordneten Trommel 12 vorgesehen sind und das Abtauchen des geschlossenen Biegewerkzeuges 5 mit der gebogenen Schraubenfeder 14 (Fig. 3) in das Härtebecken 6 durch Drehen der Trommel 12 erfolgt.

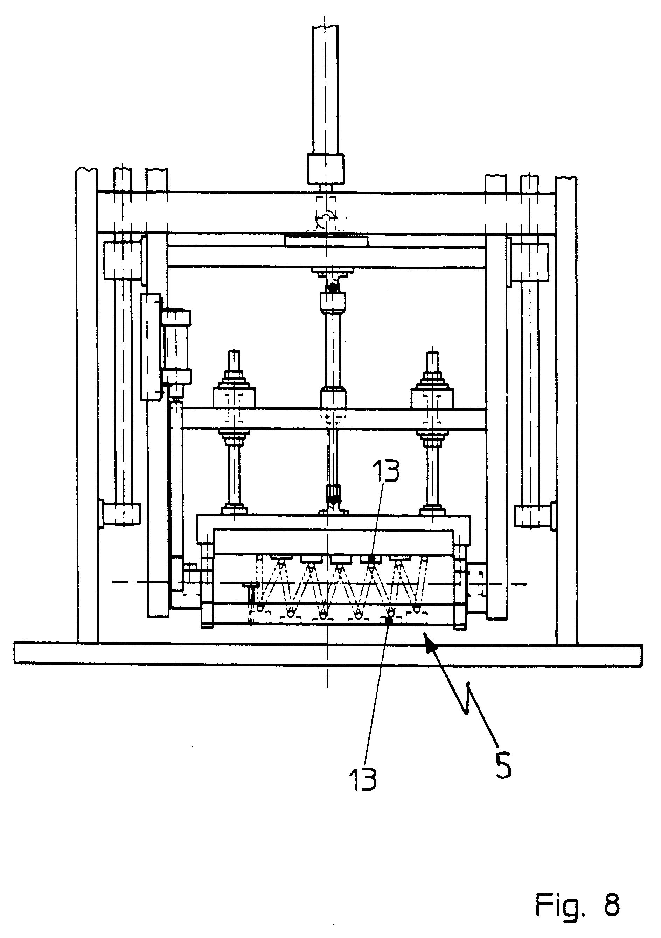

Die gewünschte Ausbiegung der Schraubenfeder (10, 14) wird durch das Schließen des Biegewerkzeuges 5 durch teilweisen (Fig. 8) oder vollständigen (Fig. 2 bis 7) Formschluß mittels am Ober- 8 und Unterteil 9 angeordneter entsprechender Formgebungswerkzeuge 13 erreicht.

Wie die Fig. 8 zeigt, wird der teilweise Formschluß nach der dort dargestellten Ausführungsform dadurch erreicht, daß für einzelne oder alle Anlagepunkte der Federwindungen im Biegewerkzeug 5 getrennte, für sich einzeln einstellbare Formgebungswerkzeuge 13 vorgesehen sind.

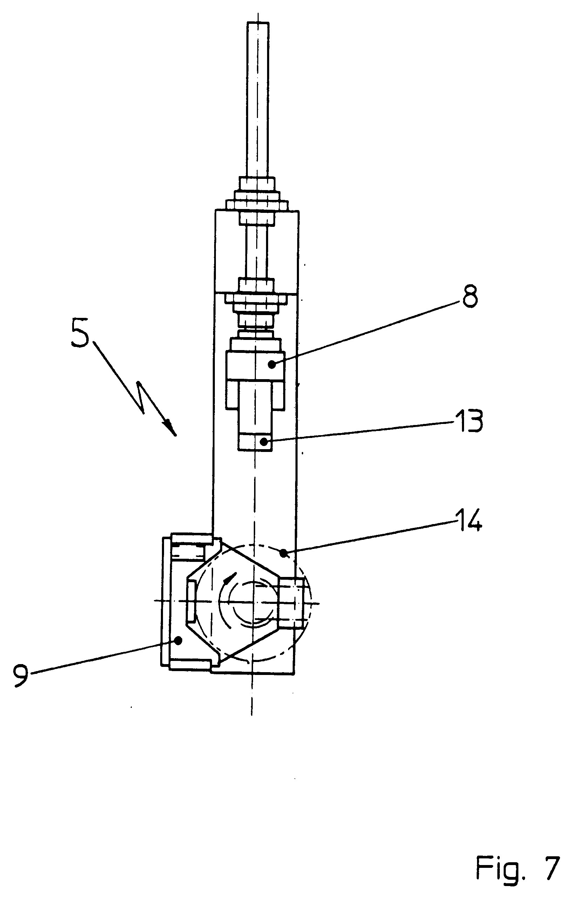

Nach dem Abtauchen des geschlossenen Biegewerkzeuges 5 mit der gebogenen Schraubenfeder 14 in das Härtebecken 6 wird die Schraubenfeder 14 nach dem Öffnen des Biegewerkzeuges 5 aus dem Unterteil 9 entladen, was gemäß Fig. 7 auch dadurch geschehen kann, daß das Unterteil 9 um 90° verschwenkt wird.

Danach wird das Biegewerkzeug 5 aus dem Härtebecken 6 in die ursprüngliche Beladeposition zurückgeführt.

### Bezugszeichen

- 1: Wärmofen
- 2: Rollgang
- 3: Stab
- 4: Wickelbank
- 5: Biegewerkzeug
- 6: Härtebecken
- 7: Einrichtung
- 8: Oberteil
- 9: Unterteil
- 10: Schraubenfeder
- 11: Portalrahmen
- 12: Trommel
- 13: Formgebungswerkzeug
- 14: Schraubenfeder

## Patentansprüche

1. Verfahren zum Herstellen von im unbelasteten Zustand gekrümmten Schraubenfedern (10) aus auf Wickeltemperatur erwärmten Drahtabschnitten bzw. Stäben (3), die als Fahrzeugtragfedern eingesetzt werden dadurch gekennzeichnet, daß zunächst eine Schraubenfeder (10) gerade gewickelt und anschließend im noch nach dem Wickeln erwärmten Zustand vor dem Härten im ganzen zur endgültigen gekrümmten Form gebogen wird.

2. Verfahren nach Anspruch 1, dadurch gekennzeichnet, daß die Endwindungen der zunächst gerade gewickelten Schraubenfeder (10) vor dem Biegen der Schraubenfeder (10) zur endgültigen Form auf einen kleineren als den gewickelten Windungsdurchmesser eingezogen werden.

3. Verfahren nach Anspruch 1 oder 2, dadurch gekennzeichnet, daß durch zeitlich unmittelbare Aufeinanderfolge der Formgebungsphasen die zur Formgebung benötigte Wärme in an sich bekannter Weise zum anschließenden Abschreckhärten der Schraubenfeder (10) genutzt wird.

4. Vorrichtung zur Durchführung des Verfahren nach Anspruch 1, wobei eine Warmwickelstraße mit einem Wärmeofen (1), einem Rollgang (2), einer Wickelbank (4) und einem Härtebecken (6) vorgesehen ist, dadurch gekennzeichnet, daß in die Warmwickelstraße zwischen Wickelbank (4) und Härtebecken (6) ein Biegewerkzeug (5) für Schraubenfedern (10; 14) integriert ist.

5. Vorrichtung nach Anspruch 4, dadurch gekennzeichnet, daß das Biegewerkzeug (5) Zangenähnlich ausgebildet ist mit einem Oberteil (8) und einem Unterteil (9), zwischen denen eine gerade gewickelte Schraubenfeder (10) im geöffneten Zustand positioniert einlegbar ist, wobei das Oberteil (8) und/oder das Unterteil (9) mindestens ein Formgebungswerkzeug (13) aufweist, welches der gewünschten Krümmung der Schraubenfeder (14) angepaßt ist.

6. Vorrichtung nach den Ansprüchen 4 und 5, dadurch gekennzeichnet, daß das Biegewerkzeug (5) in einem Portalrahmen (11) über dem Härtebecken (6) angeordnet und in das Härtebecken (6) abtauchbar ist.

7. Vorrichtung nach einem der Ansprüche 4 bis 6, dadurch gekennzeichnet, daß mehrere Biegewerkzeuge (5) auf dem Umfang einer Trommel (12) angeordnet und durch Drehung der Trommel (12) in das Härtebecken (6) abtauchbar sind.

8. Vorrichtung nach einem der Ansprüche 5 bis 7, dadurch gekennzeichnet, daß für einzelne oder alle Anlagepunkte der Federwindungen im Biegewerkzeug (5) getrennte, für sich einzeln einstellbare Formgebungswerkzeuge (13) vorgesehen sind.

9. Vorrichtung nach Anspruch 8, dadurch gekennzeichnet, daß die Formgebungswerkzeuge (13) federnd gelagert sind.

10. Vorrichtung nach Anspruch 8 oder 9, dadurch gekennzeichnet, daß die Formgebungswerkzeuge (13) während oder nach der Schließung des Biegewerkzeuges (5) horizontal verschiebbar sind.

11. Vorrichtung nach einem der Ansprüche 4 bis 10, dadurch gekennzeichnet, daß das Unterteil (9) des Biegewerkzeuges (5) dreh- oder schwenkbar angeordnet ist.

## Claims

1. A process for producing helical springs (10) which are curved in their unloaded state from lengths of wire and/or rods (3) heated to winding temperature and which are used as vehicle bearing springs, characterised in that a helical spring (10) is first wound straight and, when still in a heated state following the winding process, is subsequently bent completely into its final curved form prior to hardening.

2. A process according to claim 1, characterised in that the end windings of the helical spring (10), which is first wound straight, are drawn into a smaller diameter than the wound winding diameter before the helical spring (10) is bent into the final shape.

3. A process according to claim 1 or 2, characterised in that by means of the fact that the shape-forming phases follow each other immediately, the heat necessary for the shape-forming is used in a manner known per se for the subsequent quench hardening of the helical spring (10).

4. A device for carrying out the process according to claim 1, wherein a heated winding path is provided, and said heated winding path having a heating oven (1), a roller table (2), a winding bench (4) and a hardening basin (6), characterised in that a bending tool (5) for helical springs (10; 14) is integrated into the heated winding path between the winding bench (4) and the hardening basin (6).

5. A device according to claim 4, characterised in that the bending tool (5) is formed in a similar manner to pincers and having an upper part (8) and a lower part (9) between which in the open state a straight wound helical spring (10) can be placed and positioned, wherein the upper part (8) and/or the lower part (9) comprises at least one shape-forming tool (13) which is adapted to the desired curve of the helical spring (14).

6. A device according to claims 4 and 5, characterised in that the bending tool (5) is disposed in a frame (11) over the hardening basin (6) and can be immersed into the hardening basin (6).

7. A device according to one of claims 4 to 6, characterised in that a plurality of bending tools (5) are disposed on the circumference of a drum (12) and can be immersed into the hardening basin (6) by the rotation of the drum (12).

8. A device according to one of claims 5 to 7, characterised in that for individual or for all positioning points of the windings of the spring in the bending tool (5), separate individually adjustable shape-forming tools (13) are provided.

9. A device according to claim 8, characterised in that the shape-forming tools (13) are resiliently mounted.

10. A device according to claim 8 or 9, characterised in that the shape-forming tools (13) are horizontally displaceable during or after the closing of the bending tool (5).

11. A device according to one of claims 4 to 10, characterised in that the lower part (9) of the bending tool (5) is disposed in a rotatable or pivotable manner.

## Revendications

1. Procédé pour la fabrication de ressorts hélicoïdaux (10) cintrés à l'état non contraint, à partir de tronçons de fil ou de barreau (3) chauffés à la température d'enroulement, qui sont utilisés comme ressorts de suspension de véhicules, caractérisé en ce que l'on enroule tout d'abord un ressort hélicoïdal (10) rectiligne et qu'ensuite, à l'état encore chaud après l'enroulement, avant la trempe, on le cintre en bloc à la forme cintrée finale.

2. Procédé selon la revendication 1, caractérisé en ce qu'avant le cintrage du ressort hélicoïdal (10) à sa forme finale, les enroulements finaux du ressort hélicoïdal (10) enroulé, droit, initial sont rétrécis a un diamètre de spire plus petit que le diamètre de spire résultant de l'enroulement.

3. Procédé selon la revendication 1 ou 2, caractérisé en ce que la chaleur nécessaire pour le formage est utilisée de manière en soi connue pour le durcissement par trempe ultérieur du ressort hélicoïdal (10), en faisant se succéder immédiatement les phases de formage.

4. Dispositif en vue de l'exécution du procédé selon la revendication 1, dans lequel est prévue une ligne d'enroulement à chaud comportant un four de chauffe (1), une piste à rouleaux (2), un banc d'enroulement (4) et un bac de trempe (6), caractérisé en ce qu'un outil de cintrage (5) de ressorts hélicoïdaux (10; 14) est intégré dans la ligne d'enroulement à chaud, entre le banc d'enroulement (4) et le bac de trempe (6).

5. Dispositif selon la revendication 4, caractérise en ce que l'outil de cintrage (5) est configuré en forme de pince, avec une partie supérieure (8) et une partie inférieure (9) entre lesquelles, à l'état ouvert, peut être placé un ressort hélicoïdal enroulé droit (10), la partie supérieure (8) et/ou la partie inférieure (9) présentant au moins un outil de formage (13) qui est adapté au cintrage souhaité du ressort hélicoïdal (14).

6. Dispositif selon les revendications 4 et 5, caractérisé en ce que l'outil de cintrage (5) est disposé dans un bâti en portique (11) au-dessus du bac de trempe (6) et peut être plongé dans le bac de trempe (6).

7. Dispositif selon l'une des revendications 4 à 6, caractérisé en ce que plusieurs outils de cintrage (5) sont disposés à la périphérie d'un tambour (12) et peuvent être plongés dans le bac de trempe (6) par rotation du tambour (12).

8. Dispositif selon l'une des revendications 5 à 7, caractérisé en ce que des outils de formage (13) distincts, ajustables individuellement, sont prévus pour certains ou pour tous les points d'appui des enroulements du ressort dans l'outil de cintrage (5).

9. Dispositif selon la revendication 8, caractérise en ce que les outils de formage (13) sont montés à ressorts.

10. Dispositif selon la revendication 8 ou 9, caractérisé en ce que les outils de formage (13) peuvent être déplacés horizontalement pendant ou après la fermeture de l'outil de cintrage (5).

11. Dispositif selon l'une des revendications 4 à 10, caractérisé en ce que la partie inférieure (9) de l'outil de cintrage (5) est disposée de manière à pouvoir être tournée ou inclinée.
